# EUROPEAN PATENT SPECIFICATION

(11) **EP 3 649 815 B1**
(45) Date of publication and mention of the grant of the patent: **22.12.2021**
(21) Application number: 17916673.1
(22) Date of filing: 03.07.2017
(51) Int. Cl.: H04W 72/04, H04B 7/26, H04J 11/00, H04W 56/00

(54) **IMPROVING THE PERFORMANCE OF A WIRELESS TIME DIVISION DUPLEX, TDD, SYSTEM**
VERBESSERUNG DER LEISTUNG EINES DRAHTLOSEN ZEITMULTIPLEX-DUPLEX(TDD)-SYSTEMS
AMÉLIORATION DE LA PERFORMANCE D'UN SYSTÈME DUPLEX À RÉPARTITION DANS LE TEMPS (TDD) SANS FIL

(43) Date of publication of application: 13.05.2020
(73) Proprietor: Telefonaktiebolaget LM Ericsson (publ), 164 83 Stockholm (SE)
(72) Inventor: LOPEZ, Miguel, 170 69 Solna (SE); WANG, Yu, 169 74 Solna (SE); SUNDMAN, Dennis, 191 47 Sollentuna (SE); DEL CARPIO VEGA, Luis Felipe, 02600 Espoo (FI)
(74) Representative: Zacco Sweden AB
(86) International application number: PCT/SE2017/050740
(87) International publication number: WO 2019/009770

(56) References cited:
- EP-A2- 0 670 640
- WO-A1-01/01716
- US-A1- 2001 043 572
- US-A1- 2008 004 070
- "Digital Enhanced Cordless Telecommunications (DECT); DECT evolution technical study; Requirements and technical analysis for the further evolution of DECT and DECT ULE", ETSI TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. DECT, no. V1.1.1 30 June 2017 (2017-06-30), pages 1-84, XP014290932, Retrieved from the Internet: URL:http://www.etsi.org/deliver/etsi_tr/10 3400_103499/103422/01.01.01_60/tr_103422v0 10101p.pdf [retrieved on 2017-06-30]
- FEEI: "ETSI DECT contribution on 5G standardisation", , 18 May 2016 (2016-05-18), XP014272890, route des Lucioles ; F-06921 Sophia-Antipolis ; France Retrieved from the Internet: URL:docbox.etsi.org\DECT\DECT\05- CONTRIBUTIONS\2016\DECT(16)000069r1_ETSI_D ECT_contribution_on_5G_standardisation.ppt ;docbox.etsi.org\DECT\D ECT\05-CONTRIBUTIONS\2016\2016_05_18_ PL _DECT#69-ULE#21\DECT(16)000069r1_ETSI_DECT _contribution_on_5 G_standardisation.ppt
- DSPG Edinburgh Ltd: "DECT for 5G", , 24 May 2017 (2017-05-24), XP014294863, route des Lucioles ; F-06921 Sophia-Antipolis ; France Retrieved from the Internet: URL:docbox.etsi.org\DECT\DECT\05-CONTRIBUT IONS\2017\DECT(17)000112_DECT_for_5G.pdf;d ocbox.etsi .org\DECT\DECT\05- CONTRIBUTIONS\2017\2017_05_30_ PL _DECT#73-ULE#25-URLLC#2\DECT(17)000112_DEC T_for_5G.pdf

## Description

### TECHNICAL FIELD

The proposed technology generally relates to wireless communications technology and more specifically concerns a method of operating a communication unit in a wireless Time Division Duplex, TDD, system, and a communication unit configured for operation in a wireless TDD system, as well as a corresponding computer program and computer-program product, and an apparatus for operating a communication unit in a wireless TDD system.

### BACKGROUND

A TDD system refers to a communication system in which the transmissions in two directions, e.g. uplink and downlink, between two transmission points are separated by the allocation of different time slots. Usually, the transmissions utilize the same frequency band. The transceiver residing in each communication point switches between the transmitting and receiving modes in accordance with the allocated time slots. Existing TDD systems include DECT (Digital Enhanced Cordless Telecommunication), TD-CDMA (Time Division - Code Division Multiple access) and LTE-TDD (Long-Term Evolution - Time-Division Duplex) system.

The Digital Enhanced Cordless Telecommunication (DECT) standard is a world-wide standard developed for cordless phones. The spectrum used for DECT is in Europe 1880 - 1900 MHz, and in USA 1910 - 1920 MHz. The 20 MHz in Europe is then divided into 10 frequency channels of 2 MHz each, and in the USA there are 5 frequency channels of 2 MHz each. These frequency channels are multiplexed using TDD for uplink and downlink using the terminology frame. One frame contains 12 time slots for uplink (UL), and 12 time slots for downlink (DL). The frame is 10 ms long. The frequency and time division used in DECT (in the case of Europe) uses a multi-frame structure composed of 16 frames.

In the DECT standard, Fixed Part (FP) identities refer to access points to which devices can connect. The devices, traditionally cordless phones, are referred to as Portable Part (PP) identities. In a typical voice call scenario, a FP-to-PP connection will use one time-slot in uplink and one time-slot in downlink, being fixed on one frequency. Uplink and downlink time-slots are separated by 12 time-slots (5 ms). Using 1 time-slot in uplink and 1 in downlink is referred to as using 1 duplex channel. Using this terminology, there are in total 120 duplex channels. Since a FP typically is fixed on one frequency, a single FP can use up 12 duplex channels. If higher throughput is needed, one FP-to-PP connection may use more channels.

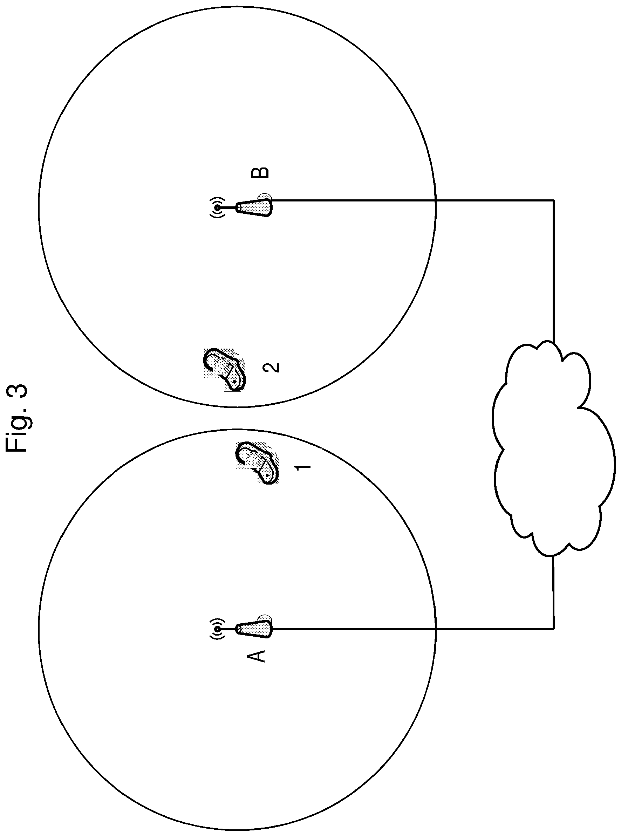

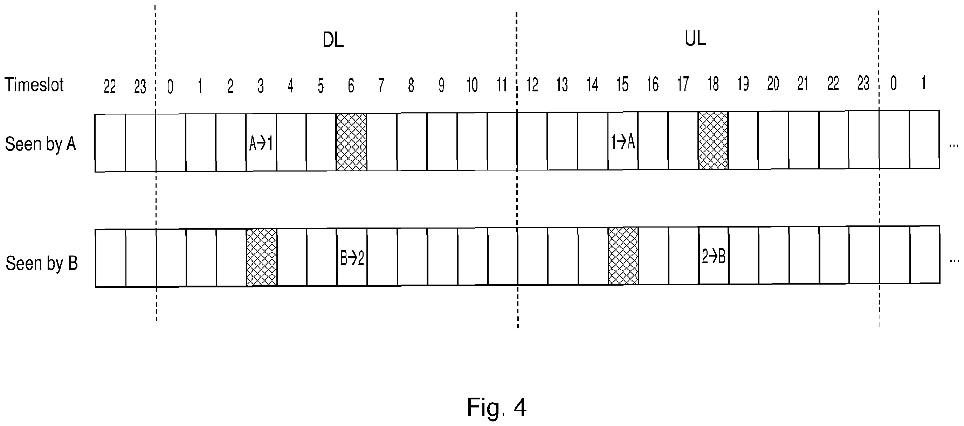

One mode of operation in DECT is synchronized operation. This means that multiple FPs are synchronized in their time-slot operation. The general concept is illustrated in FIG. 3 and FIG. 4.

In the example of FIG. 3, PP 1 is associated to FP A and PP 2 is associated to FP B. The two FPs are operating in synchronized mode, meaning they are aligned and synchronized in time.

This is further illustrated in FIG. 4, where it can be noted that that PP 1 is allocated DL slot 3 and UL slot 15 while PP 2 is allocated slot 6 in DL and slot 18 in UL. Since the FPs are synchronized, the slots 3 and 15 are black-listed and unavailable for usage in FP 2, while the slots 6 and 18 are black-listed and unavailable for usage in FP 1. Note that FIG. 4 only depicts one frequency channel. Naturally, all channels would be available for both FPs if the FPs were using different frequencies.

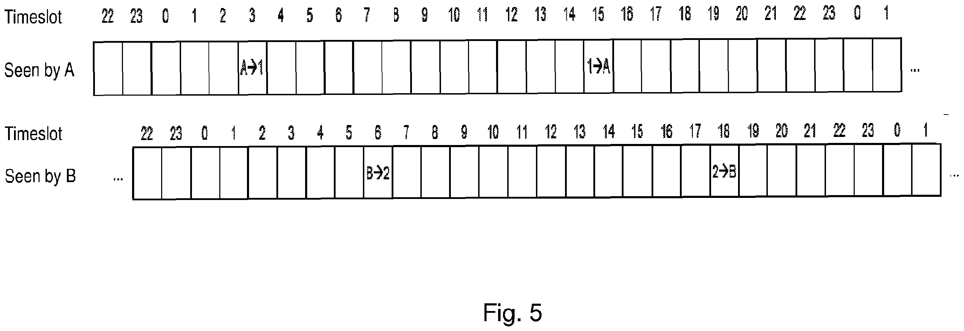

DECT also supports unsynchronized operation, where there is no alignment between the time-slots belonging to different DECT networks. Referring to the example shown in FIG. 3, the time-slots may appear as illustrated in FIG. 5.

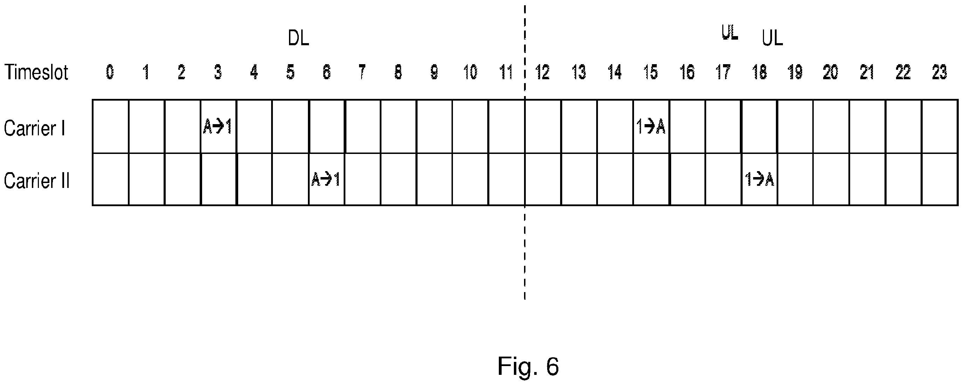

The example shown in FIG. 4 represents two duplex bearers operating on the same carrier frequency. A duplex bearer realizes bi-directional communication by forming the super frame which consists of the DL and UL time slots. The DECT also supports a double duplex bearer which is a pair of duplex bearers on different carrier frequencies. By establishing a duplex bearer between two nodes, the link between the nodes can utilize two carrier frequencies at the same time. Therefore, higher data rate may be achieved by using the double duplex bearer. FIG. 6 illustrates a double duplex bearer. It should be noticed that the two carriers are synchronized in time.

Ultra-Reliable Low Latency Communications (URLLC) and critical Machine Type Communications (cMTC) typically require very low latencies. The actual requirements vary depending on the use case. For example, one-way radio access network latencies in the order of 0.5 ms to 5 ms are commonly needed in use cases targeting indoor industrial applications.

For the purpose of explaining some problem aspects, DECT is merely used as an example, and any TDD system could generally be considered.

DECT provides unlicensed access to exclusive spectrum, and is available globally. This makes DECT an attractive technology for cMTC and URLLC, and there is a current proposal in ETSI to evolve DECT towards URLLC for the automation industry. One problem is that the TDD technique cannot deliver the short latencies that are required in many URLLC use cases.

As shown in FIG. 4, a node in a DECT system gets one transmission opportunity every 24 time slots, i.e. every 10 ms. Therefore, the maximum one direction latency is 10 ms in the DECT system. Assuming the time a data packet arriving in an empty buffer is uniformly distributed, the averaging latency introduced by the system is 5 ms. When the round trip time (RTT) delay is considered, the minimum RTT delay, i.e. the interval between a DL and an UL transmission, is 5 ms. Such latency cannot fulfill the requirements of many services, e.g. cMTC communications.

WO 2012/122676 relates to a method and apparatus for use in a system where a user equipment may be associated with an access node and may be in range of another access node, and timing information is used for defining a time period when the user equipment transmits and/or receives signals from at least one of the access nodes. when the user equipment transmits and/or receives signals from at least one of the access nodes.

US 2001/043572 relates to a method and system for multiple access communication, and more specifically concerns a virtual Frequency Division Duplex, FDD, base station having two base station sub-units, each of which comprises a base station transmitter and a base station receiver, and also a TDD base station adapted to support FDD communication.

US 2015/0341932 relates to a wireless router or residential gateway capable of distinguishing power-sensitive wireless sensors and providing separate treatment thereto.

US 2008/004070 A1 relates to a controlling apparatus configured to: search for at least one predetermined conversion function, check a system time of at least one radio protocol, define a common multiradio reference time, convert the system time of at least one radio protocol to the common multiradio reference time with the at least one conversion function and process control commands in the common multiradio reference time, and/or convert the common multiradio reference time to the system time of at least one radio protocol with the at least one conversion function and process control commands in the system time.

EP 0670640 A2 discloses an arrangement for a Time Division Multiple Access (TDMA)/TDD radio communication system with a structure for combining time slots.

DECT; DECT evolution technical study; Requirements and technical analysis for further evolution of DECT and DECT ULE"; ETSI TECHNICAL REPORT; vol. DECT, no. V1.1.1 30 June 2017, pages 1-84 addresses DECT Ultra Low Energy (ULE) variants with high reliability and low latency intended primarily for industry automation scenarios; Ultra-Reliable Low Latency Communications (URLLC) high bit rate multibearer solutions intended primarily for the professional audio industry; and introduction to the long term evolution of DECT based on OFDM.

There is a general need for improvements of the performance of TDD systems such as DECT, e.g. with respect to latency but also throughput.

### SUMMARY

It is a general object to improve the performance of Time Division Duplex, TDD, systems.

According to a first aspect, there is provided a method according to claim 1.

In this way, it is possible to improve the performance of a wireless TDD system, e.g. with respect to throughput and latency.

The proposed technology also allows a useful extension of the capabilities of existing TDD systems, such as DECT, while being compliant with current regulations and industry standards.

According to a second aspect, there is provided a communication unit according to claim 13.

Further details are defined in the dependent claims.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:

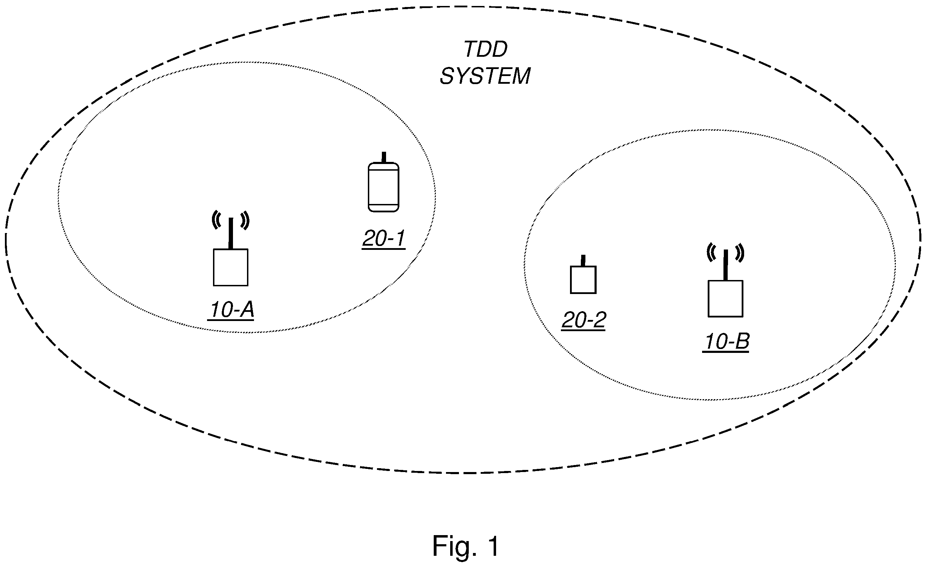

FIG. 1 is a schematic diagram illustrating an example of a wireless communication system.

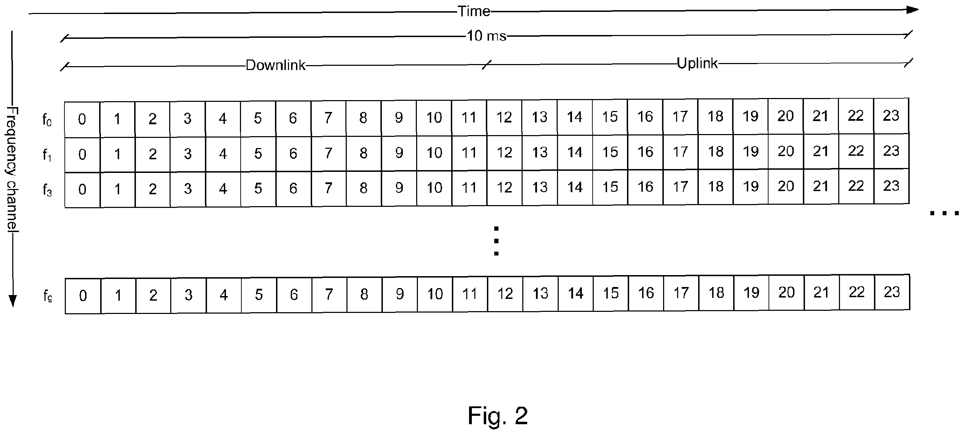

FIG. 2 is a schematic diagram illustrating an example of the time and frequency resource structure of the PHY layer in DECT.
FIG. 3 is a schematic diagram illustrating an example of two network nodes such as Fixed Part entities and associated wireless devices such as Portable Part entities.
FIG. 4 is a schematic diagram illustrating an example of synchronized DECT operation with respect to the time slot structures of different network nodes.
FIG. 5 is a schematic diagram illustrating an example of unsynchronized DECT operation with respect to the time slot structures of different network nodes.
FIG. 6 is a schematic diagram illustrating an example of the time slot structures of a pair of duplex bearers on different carriers, a so-called double duplex bearer.
FIG. 7 is a schematic flow diagram illustrating an example of a method of operating a first communication unit in a wireless TDD system.
FIG. 8 is a schematic diagram illustrating an example of a relative time offset between the time slot structures of two different logical units according to an embodiment.
FIG. 9 is a schematic diagram illustrating another example of a relative time offset between the time slot structures of two different logical units according to an embodiment.
FIG. 10 is a schematic block diagram illustrating an example of a first communication unit and a second communication unit adapted for point-to-point communication with each other using coordinated logical units.
FIG. 11 is a schematic block diagram illustrating an example of a communication unit configured for operation in a wireless TDD system according to an embodiment.
FIG. 12 is a schematic block diagram illustrating another example of a communication unit, being adapted for connection to a network device for receiving information representing a time slot allocation and/or a relative offset between time slot structures.
FIG. 13 is a schematic diagram illustrating an example of the proposed technology from a layered communication protocol perspective.
FIG. 14 is a schematic block diagram illustrating an example of communication between a FP super entity having two logical FPs and a PP super entity having two logical PPs according to an embodiment.
FIG. 15 is a schematic diagram illustrating an example of the time slot allocation for the coordinated time slot structures of two logical FPs according to an embodiment.
FIG. 16 is a schematic diagram illustrating another example of the time slot allocation for the coordinated time slot structures of two logical FPs according to an embodiment.
FIG. 17 is a schematic diagram illustrating two different examples of the time slot allocation for the coordinated time slot structures of two logical FPs according to an embodiment, with overlapping reservation of two consecutive time slots.
FIG. 18 is a schematic block diagram illustrating an example of communication between a FP super entity having two logical FPs and three PP super entities, each having two logical PPs according to an embodiment.
FIG. 19 is a schematic diagram illustrating an example of the time slot allocation for the coordinated time slot structures of two logical FPs according to an embodiment adapted for the configuration of FIG. 18.
FIG. 20 is a schematic block diagram illustrating an example of communication between a FP super entity having four physical FPs, each having a corresponding logical FP, and a PP super entity having four logical PPs according to an embodiment.
FIG. 21 is a schematic diagram illustrating an example of the time slot allocation for the coordinated time slot structures of four logical FPs according to an embodiment adapted for the configuration of FIG. 20.
FIG. 22 is a schematic diagram illustrating another example of the time slot allocation for the coordinated time slot structures of four logical FPs according to an embodiment adapted for the configuration of FIG. 20.
FIG. 23 is a schematic diagram illustrating an example of the time slot allocation for the coordinated time slot structures of two logical FPs according to an embodiment adapted for the configuration of FIG. 14.
FIG. 24 is a schematic diagram illustrating an example of a FP super entity having two logical FPs and a PP super entity having two logical PPs from a layered communication protocol perspective.
Fig. 25A is a schematic block diagram illustrating an example of a communication unit configured for operation in a wireless Time Division Duplex, TDD, system according to an embodiment.
Fig. 25B is a schematic block diagram illustrating another example of a communication unit configured for operation in a wireless Time Division Duplex, TDD, system according to an embodiment.
Fig. 25C is a schematic block diagram illustrating yet another example of a communication unit configured for operation in a wireless Time Division Duplex, TDD, system according to an embodiment.
Fig. 26 is a schematic diagram illustrating an example of a computer-implementation according to an example, which is not part of the claimed invention.
Fig. 27 is a schematic diagram illustrating an example of an apparatus for operating a communication unit in a wireless TDD system according to an example, which is not part of the claimed invention.

### DETAILED DESCRIPTION

Throughout the drawings, the same reference designations are used for similar or corresponding elements.

In the following, the general non-limiting term "communication unit" includes network nodes and/or associated wireless communication devices.

As used herein, the non-limiting term "network node" may refer to an access point, base station, a fixed part entity, or similar radio network node including also access controllers and the like, or even a distributed network node.

As used herein, the non-limiting terms "wireless communication device" and "wireless device" may refer to a terminal or station, STA, User Equipment, UE, a portable part entity, a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPad, customer premises equipment, CPE, laptop embedded equipment, LEE, laptop mounted equipment, LME, USB dongle, a portable electronic radio communication device, a sensor device equipped with radio communication capabilities or the like. In particular, the term "wireless device" should be interpreted as a non-limiting term comprising any type of wireless device communicating with a radio network node in a wireless communication system or any device equipped with radio circuitry for wireless communication according to any relevant standard for wireless communication.

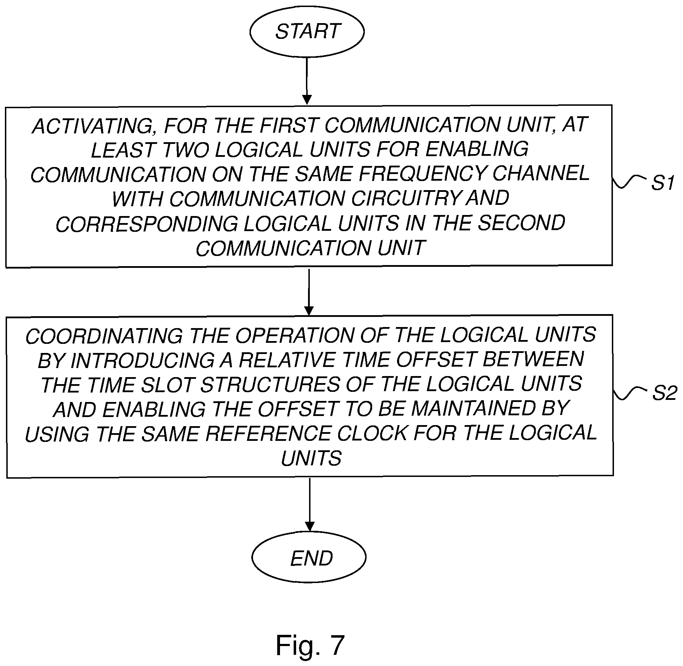

FIG. 7 is a schematic flow diagram illustrating an example of a method of operating a first communication unit in a wireless TDD system. In such a TDD system, communication in two directions between the first communication unit and a second communication unit is separated by allocation of different time slots.

Basically, the method comprises:
S1: activating, for the first communication unit, at least two logical units for operation with communication circuitry for enabling communication on the same frequency channel with communication circuitry and corresponding logical units in the second communication unit, each logical unit being allocated at least one time slot for each of the two directions in a time slot structure, wherein the time slot structure is clocked in time by a reference clock; and
S2: coordinating the operation of the logical units of the first communication unit by introducing a relative time offset between the time slot structures of the logical units for controlling communication delay and enabling the offset to be maintained by using the same reference clock for the logical units.
   In this way, it is possible to improve the performance of a wireless TDD system, e.g. with respect to throughput and latency.

By using several logical units, each being allocated at least one time slot for each of the two directions, the throughput performance can be improved.

By coordinating the operation of the logical units using an appropriate relative time offset between the time slot structures of the logical units it is possible to control the communication delay and/or latency. By way of example, it is possible to provide a significant latency reduction.

As an example, the offset may be determined based on a latency requirement and/or a throughput requirement.

The proposed technology also allows a useful extension of the capabilities of existing TDD systems, such as DECT, while being compliant with current regulations and industry standards.

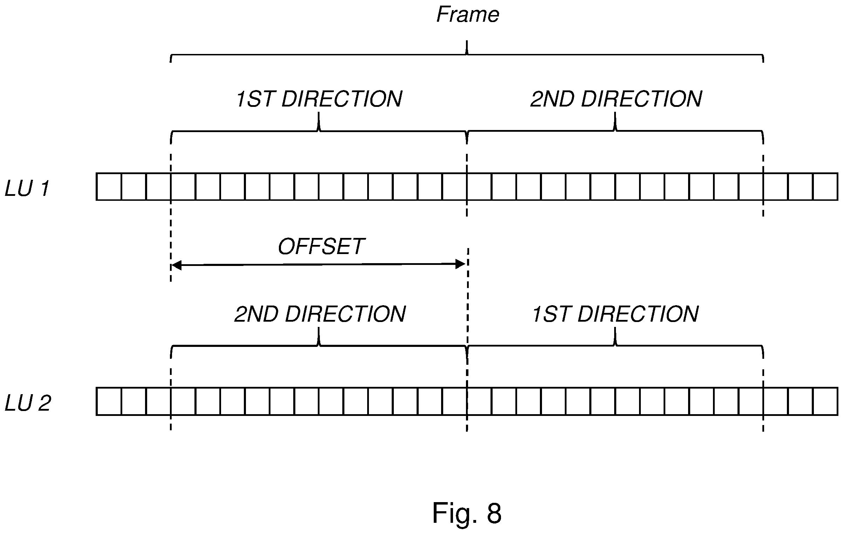

FIG. 8 is a schematic diagram illustrating an example of a relative time offset between the time slot structures of two different logical units according to an embodiment.

In this example, the time slot structure is based on frames of time slots, wherein each frame comprises a first set of consecutive time slots eligible for communication in a first direction and a second set of consecutive time slots eligible for communication in a second direction. For example, the operation of the logical units is coordinated by offsetting the time slot structures of the logical units such that the first set of time slots of a first one of the logical units (LU1) and the second set of time slots of a second one of the logical units (LU2) are overlapping in time.

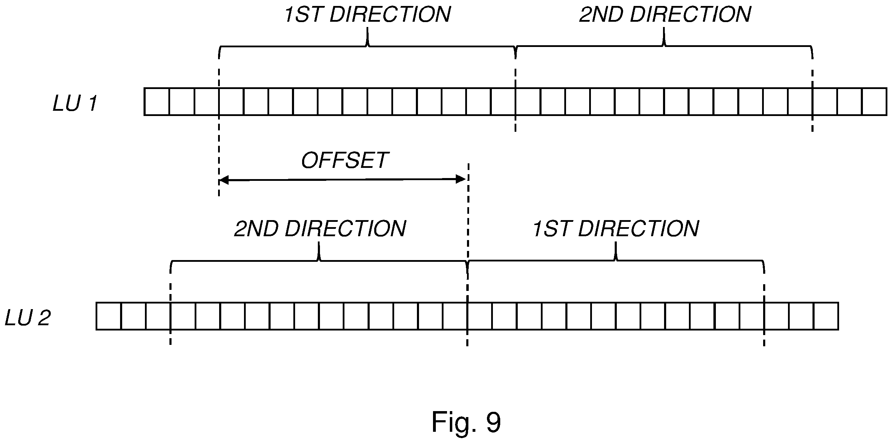

FIG. 9 is a schematic diagram illustrating another example of a relative time offset between the time slot structures of two different logical units according to an embodiment.

By way of example, the first set of time slots of a first one of the logical units (LU1) may be downlink time slots and the second set of time slots of a second one of the logical units (LU2) may be uplink time slots to provide an overlap between uplink and downlink time slots of the logical units.

Alternatively, the proposed technology may be regarded as a coordination of the operation of the logical units by offsetting the time slot structures of the logical units such that an allocated time slot for communication in a first direction for a first one of the logical units (LU1) is located at position i and an allocated time slot for communication in a second direction for a second one of the logical units (LU2) is located at position i±N, where N is less than half the number of time slots in a frame.

By way of example, considering a DECT system, where each frame comprises 24 time slots, 12 time slots for the uplink and 12 time slots for the downlink, N is preferably less than 12.

The lower the value of N, the greater the overlap between the first set of time slots of a first one of the logical units (LU1) and the second set of time slots of a second one of the logical units (LU2).

As an example, it may be practical to select N to accommodate the switching time required to switch between reception mode and transmission mode, and/or the packet processing time required to process a received packet. In other words, N may be selected so that the relevant node has time to switch between reception and transmission and/or time to process a received packet before starting transmission in the opposite direction.

For example, N may be equal to 1 or 2. This provides a substantial latency reduction.

In a particular example, the operation of the logical units may be coordinated such that a first set of time slots allocated for communication in a first direction for a first one of the logical units and a second set of time slots allocated for communication in a second direction for a second one of the logical units are overlapping in time, where each set of time slots comprises at least one time slot that is allowed for communication and at least one time slot that is disabled for communication to avoid collisions.

For example, the operation of the logical units may be coordinated such that priority in time is given to communication in the first direction in that the time slot(s) allowed for communication in the first direction occurs in a frame before the time slot(s) allowed for communication in the second direction.

Optionally, the operation of the logical units may be coordinated such that priority in time is then changed to communication in the second direction in that the time slot(s) allowed for communication in the second direction occurs in a frame before the time slot(s) allowed for communication in the first direction.

Preferably, the time slot allocation including disabling the use of some time slots and/or the offset determination may be performed dynamically at run-time.

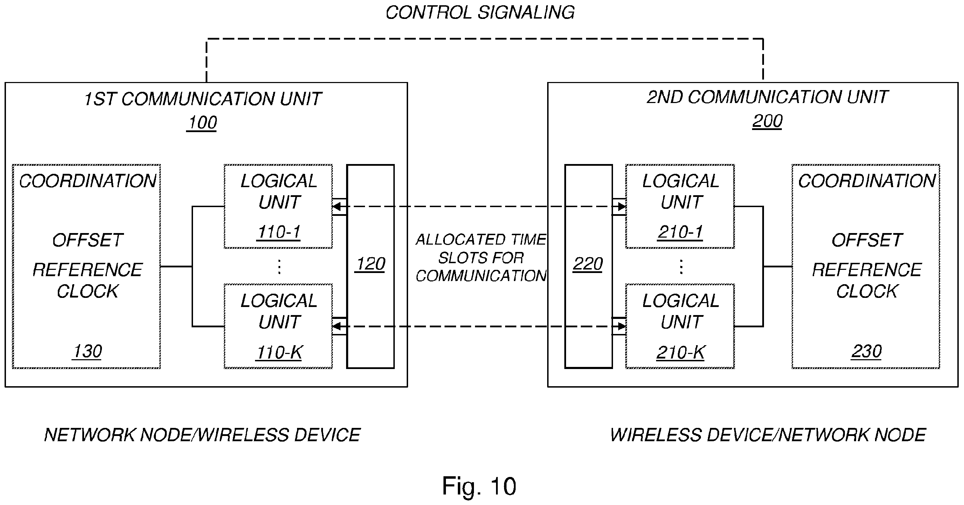

FIG. 10 is a schematic block diagram illustrating an example of a first communication unit and a second communication unit adapted for point-to-point communication with each other using coordinated logical units. The first communication unit 100 comprises a number, K ≥ 2, of logical units 110-1, ..., 110-K adapted for operation with communication circuitry 120 for enabling communication on the same frequency channel with communication circuitry 220 and corresponding logical units 210 in the second communication unit 200.

Each logical unit 110 is allocated at least one time slot for each of the two directions in a time slot structure, wherein the time slot structure is clocked in time by a reference clock.

The first communication unit 100 also comprises a coordination unit 130 configured to coordinate the operation of the logical units 110 of the communication unit 100 by introducing a relative time offset between the time slot structures of the logical units 110 for controlling communication delay and enabling the offset to be maintained by using the same reference clock for the logical units 110.

Similarly, the second communication unit 200 also comprises a coordination unit 230 configured to coordinate the operation of the logical units 210 of the communication unit 200.

In a particular example, for each logical unit, information representing the time slot structure and/or allocated time slots is advertised through signaling between the first communication unit 100 and the second communication unit 200.

As an example, information representing the number of logical units and the relative time offset between the time slot structures of the logical units may be determined based on the received signaling, and the logical units of the first communication unit 100 may be paired with the logical units of the second communication unit 200.

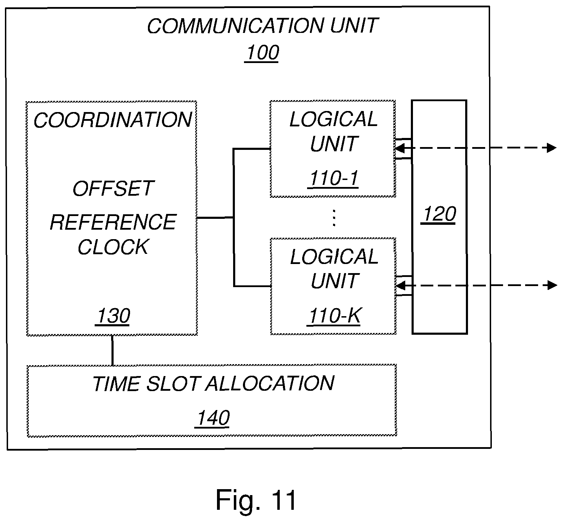

FIG. 11 is a schematic block diagram illustrating an example of a communication unit configured for operation in a wireless TDD system according to an embodiment. In this example, the communication unit 100 comprises a time slot allocation unit 140 for performing allocation of time slots.

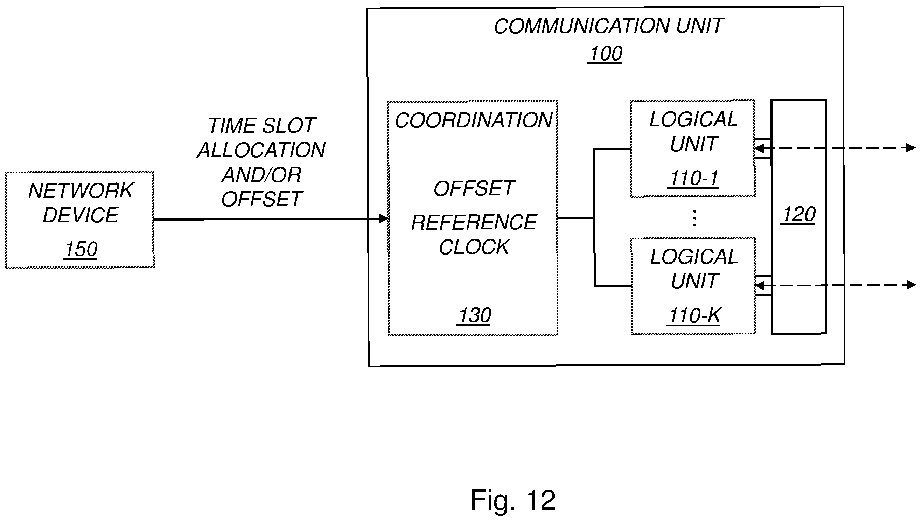

FIG. 12 is a schematic block diagram illustrating another example of a communication unit 100, being adapted for connection to a network device 150 for receiving information representing a time slot allocation and/or a relative offset between time slot structures.

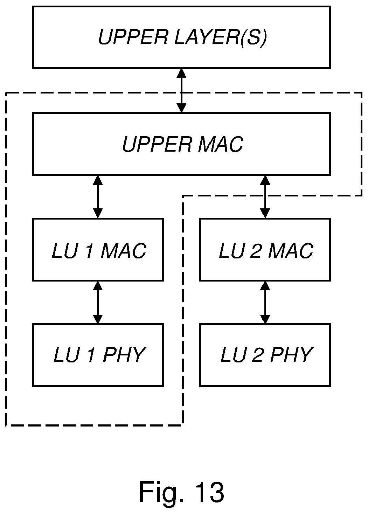

FIG. 13 is a schematic diagram illustrating an example of the proposed technology from a layered communication protocol perspective. In this example, each logical unit has its own Medium Access Control, MAC, unit for cooperation with an upper MAC unit common for the logical units, and the upper MAC controls the flow of packet data units to and/or from the MAC units of the logical units based on latency requirements of the packet data units.

In a physically distributed implementation, the PHY layer and MAC layer of one of the logical units may be implemented together with the upper MAC unit in the same physical entity, as schematically indicated by the dashed lines in FIG. 13.

Alternatively, the PHY and MAC layers of both/all logical units may be implemented together with the upper MAC unit, as well as additional layers, in the same physical entity.

In a particular, non-limiting example, the wireless TDD system is a Digital Enhanced Cordless Telecommunication, DECT, system and the logical units are operated in unsynchronized DECT mode, but coordinated in time by providing the offset between the time slot structures of the logical units and using the same reference clock.

For example, the first communication unit 100 may be a network node and the second communication unit 200 may be a wireless device.

The first communication unit 100 may be responsible for allocating time slots and/or determining the relative time offset, as indicated in FIG. 12.

Alternatively, the first communication unit 100 receives information representing the allocation of time slots and/or the relative time offset is from a network device 150 such as a cloud-based network device, as indicated in FIG. 13.

In another example, the first communication unit 100 may be a wireless device and the second communication unit 200 may be a network node.

In the embodiments described herein, the network node may for example be an access point, a base station, a fixed part entity, or even a distributed network node. Similarly, the wireless device may for example be a User Equipment, a portable part entity, a mobile station or a terminal.

For a better understanding, the proposed technology will now be described with reference to non-limiting examples relating to DECT. It should be understood that the proposed technology is not limited thereto, but may be generally applicable to any TDD system.

In this context, a basic idea is to introduce logical parts, i.e. logical FPs and logical PPs to extend the possibilities of DECT. Also, the concepts of a super-FP, also referred to as a FP super entity, and a super-PP, also referred to as a PP super entity, are introduced, each of which contains multiple logical FPs and logical PPs.

Each logical FP/PP can be seen as a TDD transceiver. The time references of the multiple logical links between pairs of the logical FP and PP nodes are shifted by a certain number of time slots. By allocating certain time slots of each logical link to the transmission between the super-FP and super-PP, the transmission latency can be reduced and throughput increased. A certain muting pattern for each logical link may also be introduced to avoid transmission/reception interference in the same node.

By way of example, a super-FP or super-PP may be distributed over separate physical entities, thus providing additional spatial diversity, or may reside physically in the same network node.

As the applications of wireless technologies expand from voice to mobile broadband to industrial automation and critical machine type communications, it becomes necessary to design new air interfaces that can cope with new, often more stringent requirements. However, the standardization of new wireless technologies, the allocation of new spectrum and the development of new chipsets is a lengthy and expensive process. The invention discloses methods to reduce latency in TDD wireless systems, which although not ideally suited for industrial automation, may still prove useful to fill an industry need, due to the advantages of being compatible with existing TDD systems and having advantageous spectrum allocations, and hence avoiding the need for new spectrum, standardization or chipset development.

The proposed method can achieve lower latency and higher throughput compared to prior art solutions. The one-direction latency may be reduced by at least half with the proposed method, and latencies as low as 0.5 ms can be achieved.

The proposed method is also compliant with the current DECT regulations, so that the method may be applied to current products without violation of the regulations. This may facilitate the re-use of existing chipsets for industrial automation, and/or accelerate the introduction of DECT in industrial applications.

In other words, the proposed technology discloses ways of reducing latency in TDD systems. For the sake of clarity and concreteness, the proposed technology will now be illustrated through the non-limiting example of a DECT system.
A logical FP may be anything from a complete independent TX/RX chain to a purely logical device sharing all physical components with another logical FP. Let a super-FP be a FP containing multiple logical FPs. Thus, a super-FP may be realized in practice in many ways. For example, a super-FP may be constructed as a set of interconnected but separate wireless nodes, each possessing its own TX/RX chains and implementing one FP. Another possible realization is as one network node implementing the functionality of several logical FP's in one chipset and having only one TX/RX chain. Similarly, we may let a super-PP contain multiple logical PPs.

These FPs may then work under the regulations for unsynchronized DECT, while they in fact may have full synchronization capabilities with each other. Thus, we let a physical super-FP include possibly multiple logical FPs. Note that although the examples here assume integer offsets where channels experience perfect time alignment, we could also consider scenarios where perfect time alignment is not there. For example, we could consider having odd multiples of half a time slot as offset between two logical devices.

To better understand the strength of using the logical devices, reference can be made to the following examples.

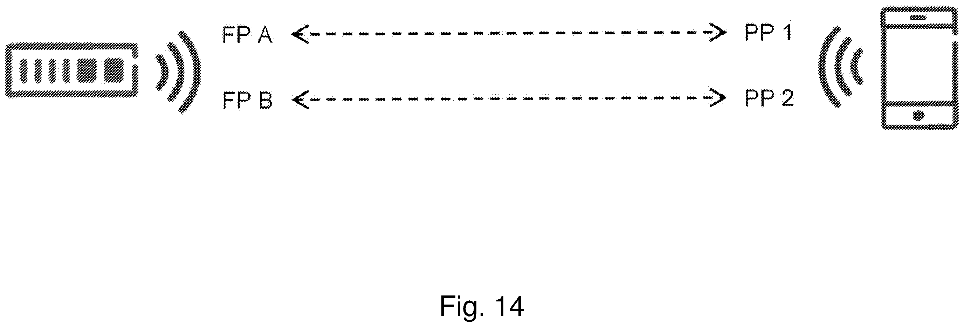

FIG. 14 is a schematic block diagram illustrating an example of communication between a FP super entity having two logical FPs and a PP super entity having two logical PPs according to an embodiment. In this example, the FP super entity, or super-FP, includes two logical FPs, FP A and FP B. Furthermore, the PP super entity, or super-PP, includes two logical PPs, PP 1 and PP 2. As illustrated in FIG. 14, FP A is connected to PP 1 and FP B is connected to PP 2.

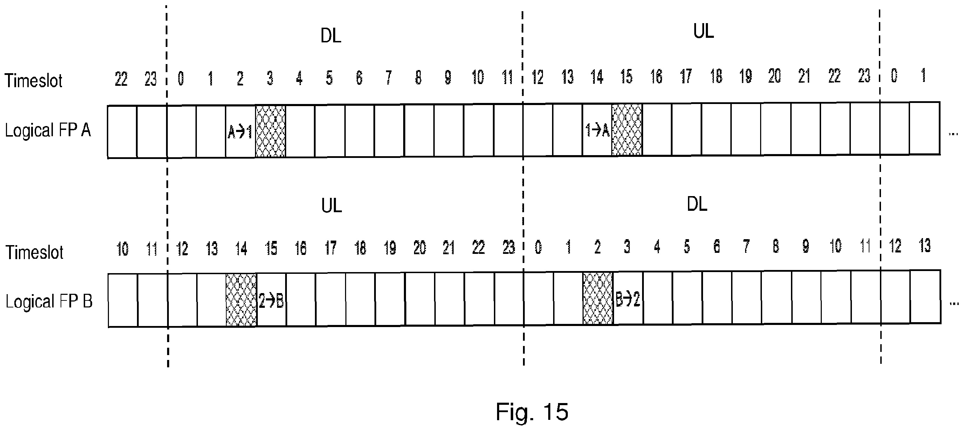

In this example, FP A and FP B may be operated in the unsynchronized DECT mode while having synchronized clocks. This enables us to let FP B keep a constant time-offset compared to FP A, e.g. with precisely 12 time slots (5 ms) difference, e.g. as illustrated in FIG. 15. Thus, FP A and FP B are in fact time synchronized, but operating under the unsynchronized mode. In other words, while the time slot boundaries are aligned, the frames are not time aligned. The links between the two pairs of logical nodes operate in the same frequency band.

FIG. 15 is a schematic diagram illustrating an example of the time slot allocation for the coordinated time slot structures of two logical FPs according to an embodiment. In the example of FIG. 15, time-slots that are hashed out have been disabled to avoid collisions. Thus, FP A has disabled time-slots 3 and 15, while FP B has disabled time-slots 2 and 14. Assume then that PP 1 is connected to FP A using the time-slots 2 and 14, and that PP 2 is connected to FP B using the time-slots 15 and 3, keeping in mind that there is a 12 time slot offset between the time slot structures (time references) of FP A and FP B.

Using this methodology, a super-PP that receives a message on logical PP 1 can respond to the super-FP using logical PP 2. Using FIG. 15 as a reference, if the super-PP gets the message in time slot 2 of logical PP 1, it can respond in the next time slot, i.e. time slot 15 of logical PP 2, because of the 12 time slot offset.

In absolute terms, time slot number 2 of logical FP A (connected to PP 1) and time slot number 15 of logical FP B (connected to PP 2) are separated by one time slot. Thus, the super-FP could get a round-trip time of less than 1 ms.

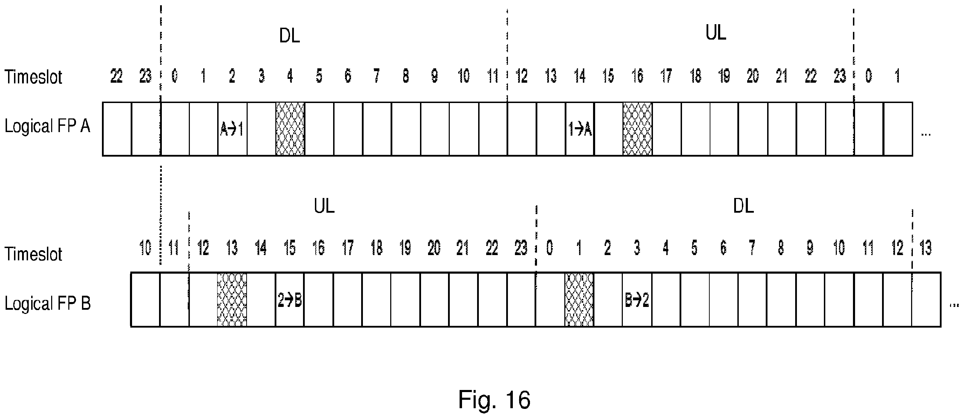

In practice, the PP will often want to decode the DL transmission prior to UL transmission and thus requires some time to perform the packet processing before transmitting in UL. In this case a different time offset might be better suited, as illustrated in FIG. 16.

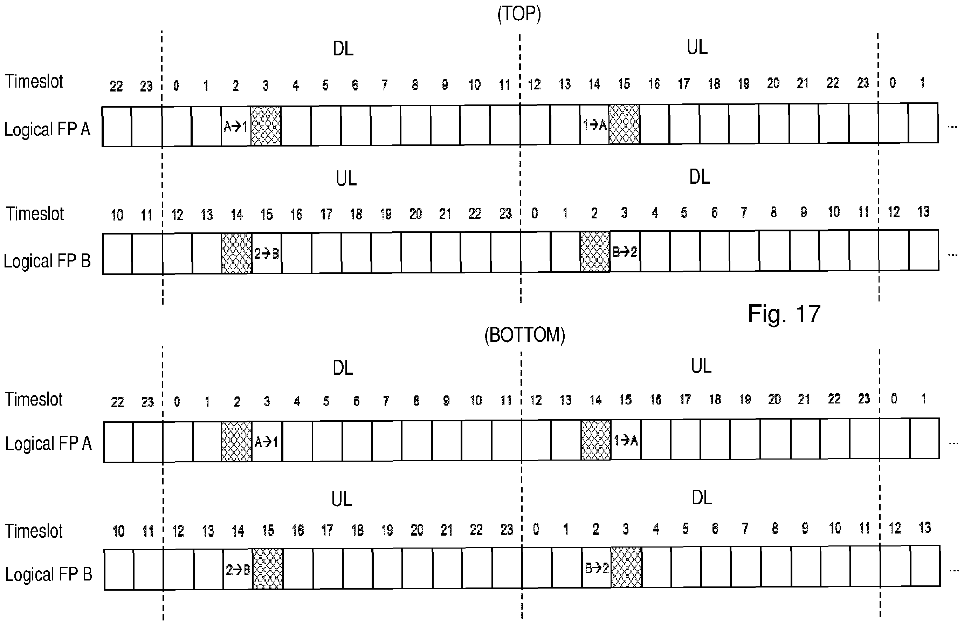

FIG. 17 is a schematic diagram illustrating two different examples of the time slot allocation for the coordinated time slot structures of two logical FPs according to an embodiment, with overlapping reservation of two consecutive time slots.

In the example of FIG. 17, channel reservation is done for two consecutive slots which overlap in time for the both time structures (for both logical FPs), similar to the example illustrated in FIG. 15, but with the possibility to change the priority of the directions DL-before-UL vs. UL-before-DL. This arrangement allows the possibility to dynamically give priority to the downlink direction or the uplink direction depending on the use case without the need to re-select the channels or the slots. To change the priority between downlink or uplink, some extra signaling is required which can be piggybacked on control bits within the transmitted packets.**Fel! Hittar inte referenskälla.** It is possible to dynamically change from the top to the bottom and vice versa.

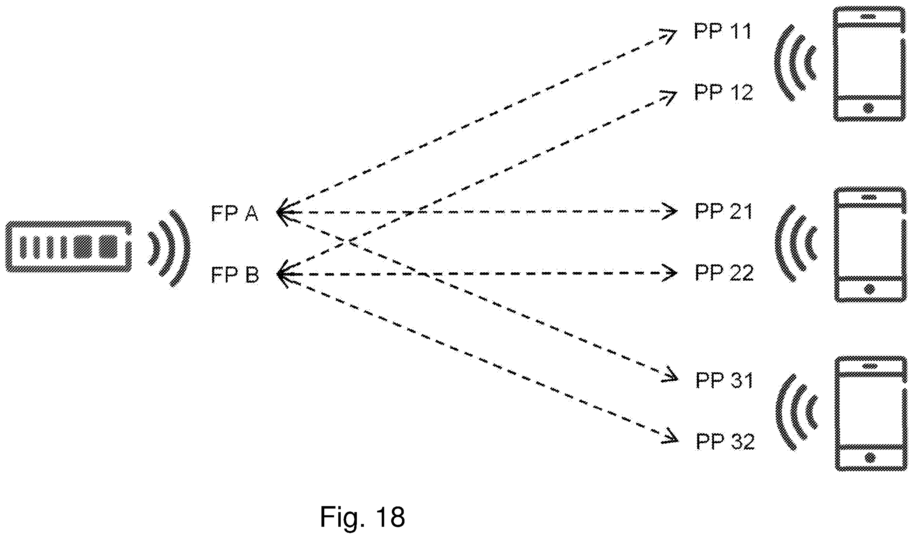

FIG. 18 is a schematic block diagram illustrating an example of communication between a FP super entity having two logical FPs and three PP super entities, each having two logical PPs according to an embodiment.

In the example of FIG. 18, several super PPs connect to one super FP. In this example we have three super PPs connected to one super FP. The two logical PPs of super PP 1 are referred to as PP 11 and PP 12. The two logical PPs of super PP 2 are referred to as PP 21 and PP 22, and the two logical PPs of super PP 3 are referred to as PP 31 and PP 32.

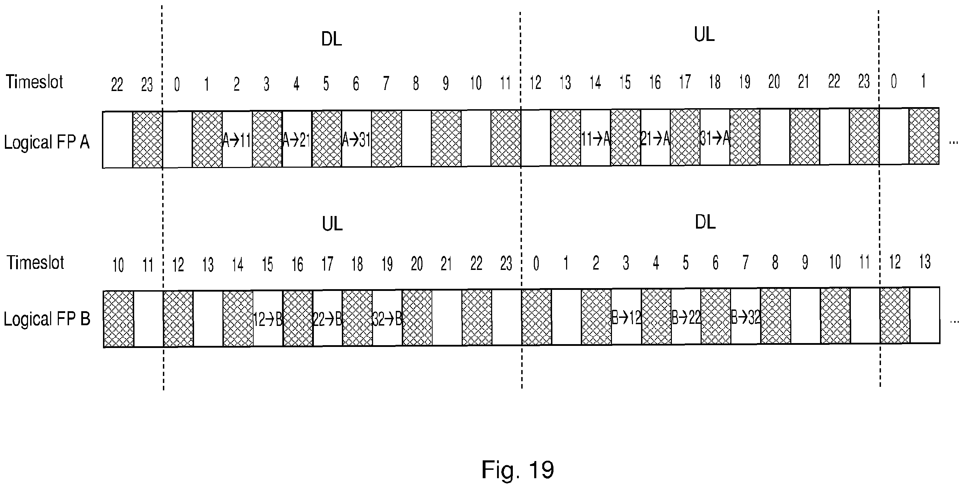

FIG. 19 is a schematic diagram illustrating an example of the time slot allocation for the coordinated time slot structures of the logical FPs according to an embodiment adapted for the configuration of FIG. 18. It can be seen precisely which timeslot is used by which logical PP. The time-slots that are hashed out have been disabled in order to avoid collisions.

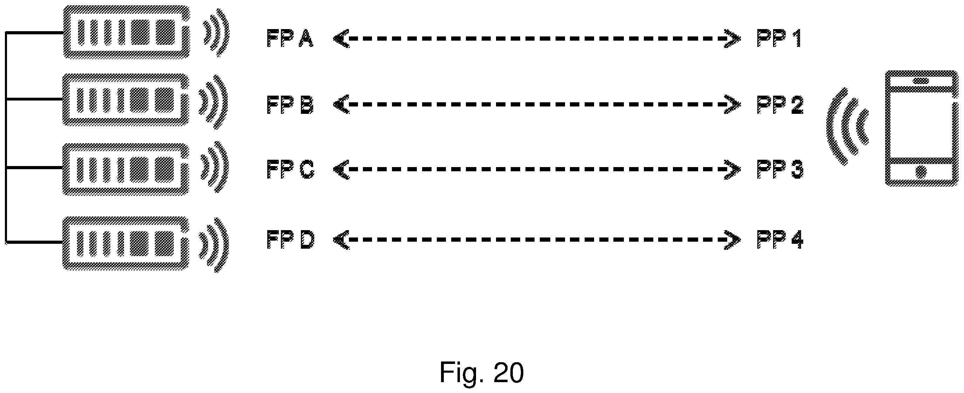

FIG. 20 is a schematic block diagram illustrating an example of communication between a FP super entity having four physical FPs, each having a corresponding logical FP, and a PP super entity having four logical PPs according to an embodiment.

In this example, a super FP includes four logical FPs distributed over four interconnected physical entities, and a super PP including four logical PPs. The four physical FPs are preferably interconnected by a wired connection. This setup is relevant when a higher throughput is required, allowing for higher throughput and better latency. Having separate TX and RX chains also provides spatial diversity and better link performance.

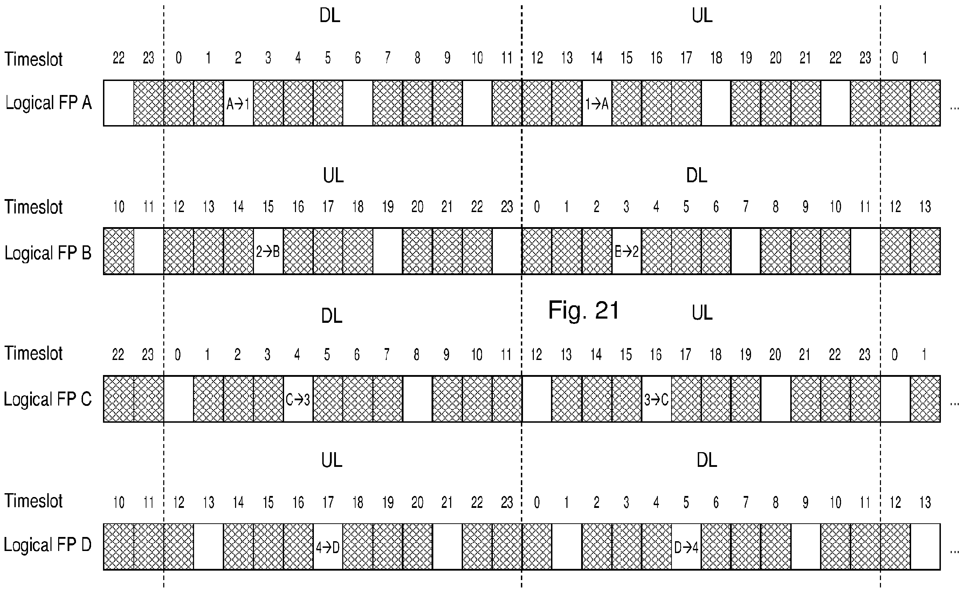

FIG. 21 is a schematic diagram illustrating an example of the time slot allocation for the coordinated time slot structures of four logical FPs according to an embodiment adapted for the configuration of FIG. 20. As before, the time-slots that are hashed out have been disabled in order to avoid collisions.

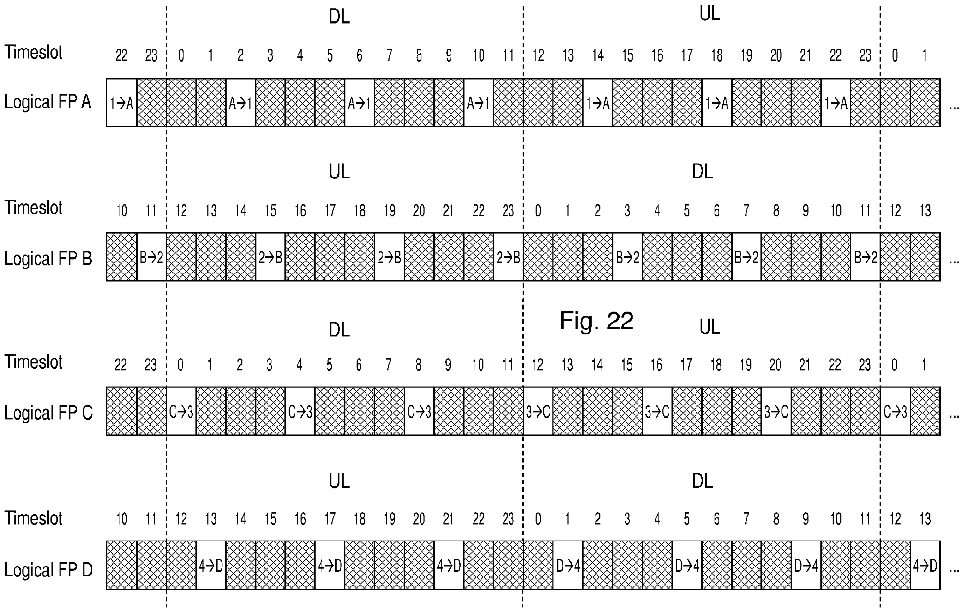

FIG. 22 is a schematic diagram illustrating another example of the time slot allocation for the coordinated time slot structures of four logical FPs according to an embodiment adapted for the configuration of FIG. 20.

In this particular example, since according to the DECT standard, each FP/PP pair may use up to three channels, it is indeed possible to assign all time-slots to one communication pair as shown in FIG. 22. This allocation provides for low latency and high throughput. There are alternative allocations to achieve the same usage.

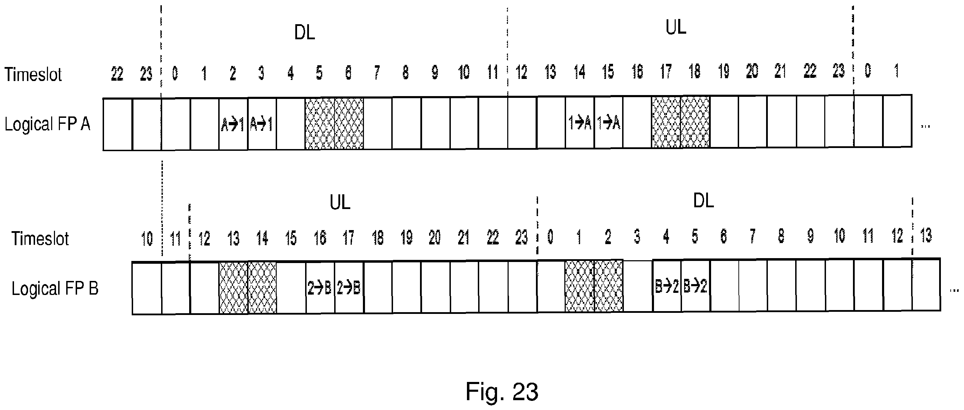

FIG. 23 is a schematic diagram illustrating an example of the time slot allocation for the coordinated time slot structures of two logical FPs according to an embodiment adapted for the configuration of FIG. 14.

The DECT standard, like other TDMA standards, allows for consecutive time-slot allocations, which can be useful to increase data rates or reliability via robust channel coding. In the example of FIG. 23, the proposed technology employs such a consecutive time-slot allocation. The time-slots that are hashed out are disabled in order to avoid collisions.

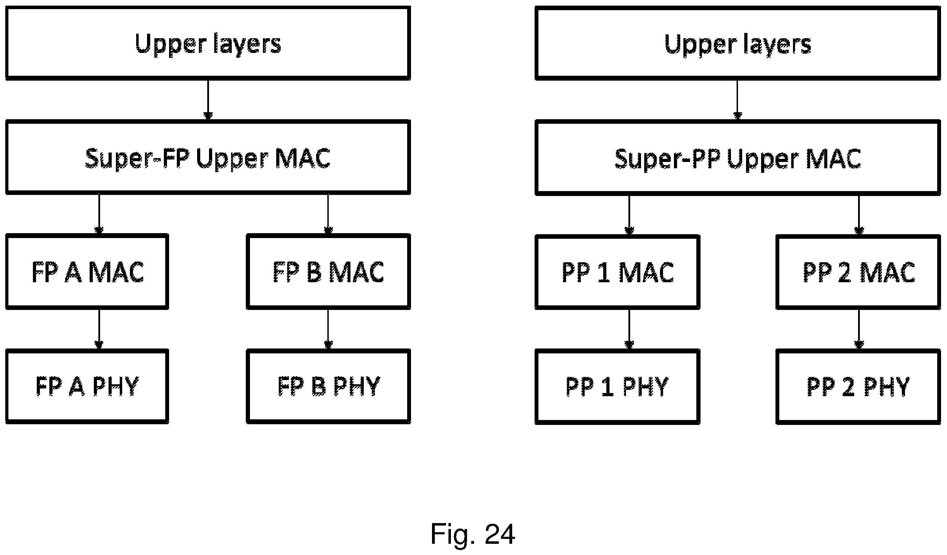

FIG. 24 is a schematic diagram illustrating an example of a FP super entity having two logical FPs and a PP super entity having two logical PPs from a layered communication protocol perspective.

For example, consider Packet data units (PDU) originating from upper layers having low latency requirements. These Low Latency PDUs arrive at an Upper MAC logical entity which selects the best logical MAC to fulfill their latency requirement. The Upper MAC logical entity has access to all the required information such as which logical entity of the super device will provide the least latency at a given moment of time.

For example, consider the system illustrated in FIG. 14, the MAC entity of FP A and FP B may thus be connected to a Super-FP Upper MAC, as illustrated in FIG. 24. When the Super-FP Upper MAC serves a Low Latency PDU, the FP MAC providing lower latency at that particular moment in time will be selected for delivering the PDU to the super-PP device. Similarly, when a super-PP device has a low latency PDU to serve, the super-PP Upper MAC will select to utilize either PP 1 MAC or PP 2 MAC in order to minimize the time to deliver the PDU.

For example, referring to the time slot allocation of FIG. 15, a PDU is delivered from the super-FP to the super-PP utilizing the logical FP A to logical PP 1 at slot 2 of the logical FP A. Assuming that the hardware processes the packet fast and it is delivered at least to the super-PP Upper MAC entity or Upper layers, it is feasible to have a Low Latency PDU as a reply to the super-FP. This Low Latency PDU will be delivered from the super-PP Upper MAC downwards, and it follows that logical PP 2 is selected to deliver the PDU to logical FP B because slot 15 of logical FP B is the fastest option to deliver the packet to the super-FP node. If more processing time is required, referring to the time slot allocation of FIG. 16, there may be one or more intermediate time slots for providing more time for data processing. However, the same slots as before where selected to serve the low latency PDU.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

According to an aspect of the proposed technology there is provided a communication unit 100 configured for operation in a wireless Time Division Duplex, TDD, system, in which communication in two directions between the communication unit 100 and another communication unit 200 is separated by allocation of different time slots.

For example, reference can once again be made to FIG. 10, FIG. 11, and FIG. 12.

The communication unit 100 is configured to activate at least two logical units 110 for operation with communication circuitry 120 for enabling communication on the same frequency channel with communication circuitry 220 and corresponding logical units 210 in the other communication unit 200. Each logical unit 110 is allocated at least one time slot for each of the two directions in a time slot structure, wherein the time slot structure is clocked in time by a reference clock.

The communication unit 100 is configured to coordinate the operation of the logical units 110 of the communication unit by introducing a relative time offset between the time slot structures of the logical units 110 for controlling communication delay and enabling the offset to be maintained by using the same reference clock for the logical units 110.

By way of example, the communication unit 100 may be configured to operate on a time slot structure that is based on frames of time slots, wherein each frame comprises a first set of consecutive time slots eligible for communication in a first direction and a second set of consecutive time slots eligible for communication in a second direction. The communication unit 100 is also configured to coordinate the operation of the logical units 110 by offsetting the time slot structures of the logical units such that the first set of time slots of a first one of the logical units and the second set of time slots of a second one of the logical units are overlapping in time.

For example, the communication unit 100 may be configured to coordinate the operation of the logical units 110 by offsetting the time slot structures of the logical units such that an allocated time slot for communication in a first direction for a first one of the logical units is located at position i and an allocated time slot for communication in a second direction for a second one of the logical units is located at position i±N, where N is less than half the number of time slots in a frame.

In a particular example, the wireless TDD system is a Digital Enhanced Cordless Telecommunication, DECT, system. The logical units 110 are preferably configured to be operated in unsynchronized DECT mode, but coordinated in time by providing the relative time offset between the time slot structures of the logical units 110 and using the same reference clock.

By way of example, the communication unit 100 may be a network node configured for communication with a wireless device.
For example, the network node may be an access point, a base station, a fixed part entity, or even a distributed network node.

Alternatively, the communication unit 100 is a wireless device configured for communication with a network node.

For example, the wireless device may be a User Equipment, a portable part entity, a mobile station or a terminal.

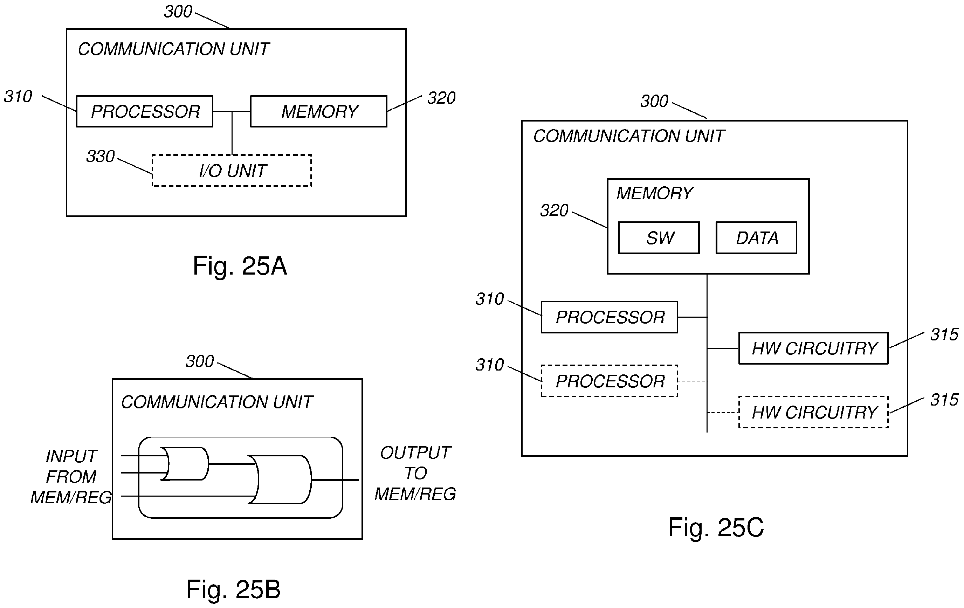

Fig. 25A is a schematic block diagram illustrating an example of a communication unit configured for operation in a wireless Time Division Duplex, TDD, system according to an embodiment.

In this particular example, the communication unit 300 comprises a processor 310 and a memory 320, the memory 320 comprising instructions executable by the processor 310, whereby the processor is operative to perform the functions described herein, including activating the logical units and coordinating the operation of the logical units.

Optionally, the communication unit 300 may also include an input/output (I/O) unit 330. The I/O unit 330 may include functions for wired and/or wireless communication with other devices and/or network nodes in the network. In a particular example, the I/O unit 330 may be based on radio circuitry for communication with one or more other nodes, including transmitting and/or receiving information. The I/O unit 330 may be interconnected to the processor 310 and/or memory 320. By way of example, the I/O unit 330 may include any of the following: a receiver, a transmitter, a transceiver, input port(s) and/or output port(s).

Fig. 25B is a schematic block diagram illustrating another example of a communication unit configured for operation in a wireless Time Division Duplex, TDD, system according to an embodiment.

In this example, the communication unit 300 is based on a hardware circuitry implementation. Particular examples of suitable hardware circuitry include one or more suitably configured or possibly reconfigurable electronic circuitry, e.g., Application Specific Integrated Circuits (ASICs), FPGAs, or any other hardware logic such as circuits based on discrete logic gates and/or flip-flops interconnected to perform specialized functions in connection with suitable registers (REG), and/or memory units (MEM).

Fig. 25C is a schematic block diagram illustrating yet another example of a communication unit configured for operation in a wireless Time Division Duplex, TDD, system according to an embodiment.

In this example, the communication unit 300 is based on combination of both processor(s) 310 and hardware circuitry 315 in connection with suitable memory unit(s) 320. The communication unit 300 comprises one or more processors 310, memory 320 including storage for software (SW) and data, and one or more units of hardware circuitry 315. The overall functionality is thus partitioned between programmed software for execution on one or more processors 310 and one or more pre-configured or possibly reconfigurable hardware circuits 315. The actual hardware-software partitioning can be decided by a system designer based on a number of factors including processing speed, cost of implementation and other requirements.

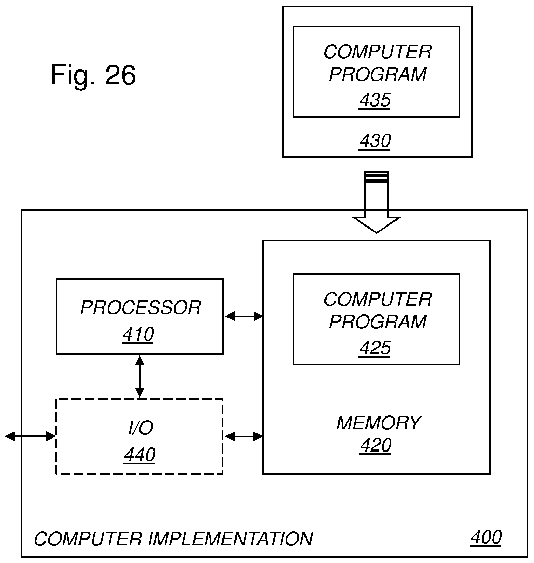

Fig. 26 is a schematic diagram illustrating an example of a computer-implementation according to an example, which is not part of the claimed invention. In this particular example, at least some of the steps, functions, procedures, modules and/or blocks described herein are implemented in a computer program 425; 435, which is loaded into the memory 420 for execution by processing circuitry including one or more processors 410. The processor(s) 410 and memory 420 are interconnected to each other to enable normal software execution. An optional input/output device 440 may also be interconnected to the processor(s) 410 and/or the memory 420 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 410 is thus configured to perform, when executing the computer program 425, well-defined processing tasks such as those described herein.

The processing circuitry does not have to be dedicated to only execute the above-described steps, functions, procedure and/or blocks, but may also execute other tasks.

In a particular example, which is not part of the claimed invention, there is provided a computer program 425; 435 for enabling, when executed by a processor 410, operation of a communication unit in a wireless Time Division Duplex, TDD, system, in which communication in two directions between the communication unit and another communication unit is separated by allocation of different time slots.

The computer program 425; 435 comprises instructions, which when executed by the processor cause the processor 410 to:
- activate, for the communication unit, at least two logical units for operation with communication circuitry for enabling communication on the same frequency channel with communication circuitry and corresponding logical units in the second communication unit, each logical unit being allocated at least one time slot for each of the two directions in a time slot structure, wherein the time slot structure is clocked in time by a reference clock; and
- coordinate the operation of the logical units of the communication unit by introducing a relative time offset between the time slot structures of the logical units for controlling communication delay and enabling the offset to be maintained by using the same reference clock for the logical units.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program 425; 435 may be realized as a computer program product, which is normally carried or stored on a computer-readable medium 420; 430, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

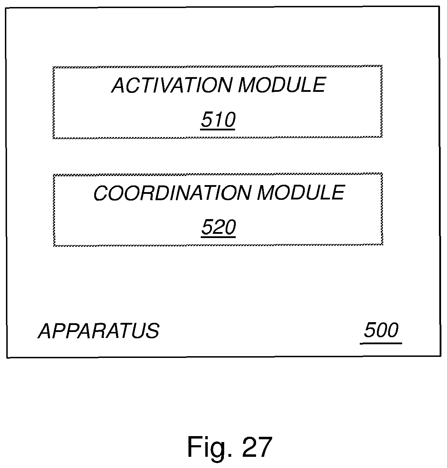

Fig. 27 is a schematic diagram illustrating an example of an apparatus for operating a communication unit in a wireless TDD system according to an example, which is not part of the claimed invention.

The apparatus 500 is adapted for operating a communication unit in a wireless Time Division Duplex, TDD, system, in which communication in two directions between the communication unit and another communication unit is separated by allocation of different time slots.

Basically, the apparatus 500 comprises:
- an activation module 510 for activating, for the communication unit, at least two logical units for operation with communication circuitry for enabling communication on the same frequency channel with communication circuitry and corresponding logical units in the other communication unit, each logical unit being allocated at least one time slot for each of the two directions in a time slot structure, wherein the time slot structure is clocked in time by a reference clock; and
- a coordination module 520 for coordinating the operation of the logical units of the communication unit by introducing a relative time offset between the time slot structures of the logical units for controlling communication delay and enabling the offset to be maintained by using the same reference clock for the logical units.

Alternatively it is possible to realize the module(s) in FIG. 27 predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

It is becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:
- Consolidation of network functionality into virtualized software running on customized or generic hardware. This is sometimes referred to as network function virtualization.
- Co-location of one or more application stacks, including operating system, running on separate hardware onto a single hardware platform. This is sometimes referred to as system virtualization, or platform virtualization.
- Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centers, in other scenarios it may in fact be beneficial to distribute functionality over different parts of the network.

A Network Device (ND) may generally be seen as an electronic device being communicatively connected to other electronic devices in the network.

By way of example, the network device may be implemented in hardware, software or a combination thereof. For example, the network device may be a special-purpose network device or a general purpose network device, or a hybrid thereof.

A special-purpose network device may use custom processing circuits and a proprietary operating system (OS), for execution of software to provide one or more of the features or functions disclosed herein.

A general purpose network device may use common off-the-shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a wireless network interface controller (WNIC) or through plugging in a cable to a physical port connected to a network interface controller (NIC). During operation, the software may be executed by the hardware to instantiate a set of one or more software instance(s). Each of the software instance(s), and that part of the hardware that executes that software instance, may form a separate virtual network element.

By way of another example, a general purpose network device may for example include hardware comprising a set of one or more processor(s), often COTS processors, and network interface controller(s) (NICs), as well as non-transitory machine readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space). These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) may perform similar functionality compared to Virtual Network Element(s) (VNEs). This virtualization of the hardware is sometimes referred to as Network Function Virtualization (NFV)). Thus, NFV may be used to consolidate many network equipment types onto industry standard high volume server hardware, physical switches, and physical storage, which could be located in data centers, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a network device ND. In certain embodiments of such a hybrid network device, a platform Virtual Machine (VM), such as a VM that implements functionality of a special-purpose network device, could provide for para-virtualization to the hardware present in the hybrid network device.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. A method of operating a first communication unit (100) in a wireless Time Division Duplex, TDD, system, in which communication in two directions between the first communication unit (100) and a second communication unit (200) is separated by allocation of different time slots, wherein the first communication unit (100) comprises at least two logical units (110), communication circuitry (120), and a coordination unit (130), and wherein the method comprises:
- activating (S1), for the first communication unit, the at least two logical units (110) for operation with the communication circuitry (120) for enabling communication on the same frequency channel with communication circuitry (220) and corresponding logical units (210) in the second communication unit (200), each logical unit (110) of the first communication unit (100) being allocated at least one time slot for each of the two directions in a time slot structure, wherein the time slot structure is clocked in time by a reference clock; and
- coordinating (S2), by the coordination unit (130), the operation of the logical units (110) of the first communication unit (100) by introducing a relative time offset between the time slot structures of the logical units (110) for controlling communication delay and enabling the offset to be maintained by using the same reference clock for the logical units (110).

2. The method of claim 1, wherein the offset is determined based on a latency requirement and/or a throughput requirement.

3. The method of claim 1 or 2, wherein the time slot structure is based on frames of time slots, wherein each frame comprises a first set of consecutive time slots eligible for communication in a first direction and a second set of consecutive time slots eligible for communication in a second direction, and the operation of the logical units (110) is coordinated by offsetting the time slot structures of the logical units (110) such that the first set of time slots of a first one of the logical units (110) and the second set of time slots of a second one of the logical units are overlapping in time.

4. The method of claim 3, wherein the first set of time slots of a first one of the logical units (110) are downlink time slots and the second set of time slots of a second one of the logical units (110) are uplink time slots to provide an overlap between uplink and downlink time slots of the logical units (110).

5. The method of any of the claims 1 to 4, wherein the operation of the logical units (110) is coordinated by offsetting the time slot structures of the logical units (110) such that an allocated time slot for communication in a first direction for a first one of the logical units (110) is located at position i and an allocated time slot for communication in a second direction for a second one of the logical units (110) is located at position *i*±*N*, where *N* is less than half the number of time slots in a frame.

6. The method of claim 5, wherein *N* is selected to accommodate the switching time required to switch between reception mode and transmission mode, and/or the packet processing time required to process a received packet.

7. The method of claim 5 or 6, wherein *N* is equal to 1 or 2.

8. The method of any of the claims 5 to 7, wherein the operation of the logical units (110) is coordinated such that a first set of time slots allocated for communication in a first direction for a first one of the logical units (110) and a second set of time slots allocated for communication in a second direction for a second one of the logical units (110) are overlapping in time, each set of time slots comprising at least one time slot that is allowed for communication and at least one time slot that is disabled for communication to avoid collisions.

9. The method of claim 8, wherein the operation of the logical units (110) is coordinated such that priority in time is given to communication in the first direction in that the time slot(s) allowed for communication in the first direction occurs in a frame before the time slot(s) allowed for communication in the second direction.

10. The method of claim 9, wherein the operation of the logical units (110) is coordinated such that priority in time is changed to communication in the second direction in that the time slot(s) allowed for communication in the second direction occurs in a frame before the time slot(s) allowed for communication in the first direction.

11. The method of any of the claims 1 to 10, wherein, for each logical unit (110), information representing the time slot structure and/or allocated time slots is advertised through signaling between the first communication unit (100) and second communication unit (200).

12. The method of any of the claims 1 to 11, wherein information representing the number of logical units (110) and the relative time offset between the time slot structures of the logical units (110) is determined based on received signaling, and the logical units (110) of the first communication unit (100) are paired with the logical units (210) of the second communication unit (200).

13. A communication unit (100) configured for operation in a wireless Time Division Duplex, TDD, system, in which communication in two directions between the communication unit (100) and another communication unit (200) is separated by allocation of different time slots,
- wherein the communication unit (100) comprises at least two logical units (110) and communication circuitry (120), and wherein the communication unit (100) is configured to activate the at least two logical units (110) for operation with the communication circuitry (120) for enabling communication on the same frequency channel with communication circuitry (220) and corresponding logical units (210) in the other communication unit (200), each logical unit (110) of the communication unit (100) being allocated at least one time slot for each of the two directions in a time slot structure, wherein the time slot structure is clocked in time by a reference clock; and
- wherein the communication unit (100) also comprises a coordination unit (130) configured to coordinate the operation of the logical units (110) of the communication unit by introducing a relative time offset between the time slot structures of the logical units (110) for controlling communication delay and enabling the offset to be maintained by using the same reference clock for the logical units (110).

14. The communication unit of claim 13, wherein the communication unit (100) is configured to operate on a time slot structure that is based on frames of time slots, wherein each frame comprises a first set of consecutive time slots eligible for communication in a first direction and a second set of consecutive time slots eligible for communication in a second direction, and the communication unit (100) is configured to coordinate the operation of the logical units (110) by offsetting the time slot structures of the logical units such that the first set of time slots of a first one of the logical units and the second set of time slots of a second one of the logical units are overlapping in time.

15. The communication unit of claim 13 or 14, wherein the communication unit (100) is configured to coordinate the operation of the logical units (110) by offsetting the time slot structures of the logical units such that an allocated time slot for communication in a first direction for a first one of the logical units is located at position i and an allocated time slot for communication in a second direction for a second one of the logical units is located at position *i*±*N*, where *N* is less than half the number of time slots in a frame.

16. The communication unit of any of the claims 13 to 15, wherein the wireless TDD system is a Digital Enhanced Cordless Telecommunication, DECT, system and the logical units (110) are configured to be operated in unsynchronized DECT mode, but coordinated in time by providing the relative time offset between the time slot structures of the logical units (110) and using the same reference clock.

## Patentansprüche

1. Verfahren zum Betreiben einer ersten Kommunikationseinheit (100) in einem drahtlosen Zeitduplex (time division duplex, TDD) -System, in dem die Kommunikation in zwei Richtungen zwischen der ersten Kommunikationseinheit (100) und einer zweiten Kommunikationseinheit (200) durch Zuweisung unterschiedlicher Zeitschlitze getrennt ist, wobei die erste Kommunikationseinheit (100) mindestens zwei logische Einheiten (110), eine Kommunikationsschaltung (120) und eine Koordinationseinheit (130) umfasst, und wobei das Verfahren Folgendes umfasst:
- Aktivieren (S1) der mindestens zwei logischen Einheiten (110) für die erste Kommunikationseinheit zum Betrieb mit der Kommunikationsschaltung (120), um eine Kommunikation auf demselben Frequenzkanal mit der Kommunikationsschaltung (220) und den entsprechenden logischen Einheiten (210) in der zweiten Kommunikationseinheit (200) zu ermöglichen, wobei jeder logischen Einheit (110) der ersten Kommunikationseinheit (100) mindestens ein Zeitschlitz für jede der beiden Richtungen in einer Zeitschlitzstruktur zugewiesen wird, wobei die Zeitschlitzstruktur zeitlich durch einen Bezugstakt getaktet ist; und
- Koordinieren (S2) des Betriebs der logischen Einheiten (110) der ersten Kommunikationseinheit (100) durch die Koordinationseinheit (130) durch Einführen eines relativen Zeitversatzes zwischen den Zeitschlitzstrukturen der logischen Einheiten (110) zur Steuerung der Kommunikationsverzögerung und zum Ermöglichen der Aufrechterhaltung des Versatzes durch Verwendung desselben Bezugstaktes für die logischen Einheiten (110) .

2. Verfahren nach Anspruch 1, wobei der Versatz auf der Grundlage einer Latenzanforderung und/oder einer Durchsatzanforderung bestimmt wird.

3. Verfahren nach Anspruch 1 oder 2, wobei die Zeitschlitzstruktur auf Rahmen von Zeitschlitzen basiert, wobei jeder Rahmen einen ersten Satz von aufeinanderfolgenden Zeitschlitzen, die für eine Kommunikation in einer ersten Richtung infrage kommen, und einen zweiten Satz von aufeinanderfolgenden Zeitschlitzen, die für eine Kommunikation in einer zweiten Richtung infrage kommen, umfasst und der Betrieb der logischen Einheiten (110) durch Versetzen der Zeitschlitzstrukturen der logischen Einheiten (110) koordiniert wird, sodass der erste Satz von Zeitschlitzen einer ersten der logischen Einheiten (110) und der zweite Satz von Zeitschlitzen einer zweiten der logischen Einheiten sich zeitlich überlappen.

4. Verfahren nach Anspruch 3, wobei der erste Satz von Zeitschlitzen einer ersten der logischen Einheiten (110) Downlink-Zeitschlitze sind und der zweite Satz von Zeitschlitzen einer zweiten der logischen Einheiten (110) Uplink-Zeitschlitze sind, um eine Überlappung zwischen Uplink- und Downlink-Zeitschlitzen der logischen Einheiten (110) bereitzustellen.

5. Verfahren nach einem der Ansprüche 1 bis 4, wobei der Betrieb der logischen Einheiten (110) koordiniert wird, indem die Zeitschlitzstrukturen der logischen Einheiten (110) so versetzt werden, dass sich ein zugewiesener Zeitschlitz für die Kommunikation in einer ersten Richtung für eine erste der logischen Einheiten (110) an der Position i und ein zugewiesener Zeitschlitz für die Kommunikation in einer zweiten Richtung für eine zweite der logischen Einheiten (110) an der Position *i±N* befindet, wobei *N* weniger als die Hälfte der Anzahl der Zeitschlitze in einem Rahmen ist.

6. Verfahren nach Anspruch 5, wobei *N* so gewählt wird, dass es die Umschaltzeit, die zum Umschalten zwischen dem Empfangsmodus und dem Sendemodus erforderlich ist, und/oder die Paketverarbeitungszeit, die zur Verarbeitung eines empfangenen Pakets erforderlich ist, berücksichtigt.

7. Verfahren nach Anspruch 5 oder 6, wobei *N* gleich 1 oder 2 ist.

8. Verfahren nach einem der Ansprüche 5 bis 7, wobei der Betrieb der logischen Einheiten (110) so koordiniert wird, dass ein erster Satz von Zeitschlitzen, die für die Kommunikation in einer ersten Richtung für eine erste der logischen Einheiten (110) zugewiesen sind, und ein zweiter Satz von Zeitschlitzen, die für die Kommunikation in einer zweiten Richtung für eine zweite der logischen Einheiten (110) zugewiesen sind, sich zeitlich überlappen, wobei jeder Satz von Zeitschlitzen mindestens einen Zeitschlitz umfasst, der für die Kommunikation zugelassen ist, und mindestens einen Zeitschlitz, der für die Kommunikation gesperrt ist, um Kollisionen zu vermeiden.

9. Verfahren nach Anspruch 8, wobei der Betrieb der logischen Einheiten (110) so koordiniert wird, dass der Kommunikation in der ersten Richtung insofern zeitliche Priorität eingeräumt wird, als dass der/die für die Kommunikation in der ersten Richtung zugelassene(n) Zeitschlitz(e) in einem Rahmen vor dem/den für die Kommunikation in der zweiten Richtung zugelassenen Zeitschlitz(en) auftritt/auftreten.

10. Verfahren nach Anspruch 9, wobei der Betrieb der logischen Einheiten (110) so koordiniert wird, dass die zeitliche Priorität auf die Kommunikation in der zweiten Richtung insofern geändert wird, als dass der/die für die Kommunikation in der zweiten Richtung zugelassene(n) Zeitschlitz(e) in einem Rahmen vor dem/den für die Kommunikation in der ersten Richtung zugelassenen Zeitschlitz(en) auftritt/auftreten.

11. Verfahren nach einem der Ansprüche 1 bis 10, wobei für jede logische Einheit (110) Informationen, die die Zeitschlitzstruktur und/oder zugewiesene Zeitschlitze darstellen, durch Signalisierung zwischen der ersten Kommunikationseinheit (100) und der zweiten Kommunikationseinheit (200) bekannt gemacht werden.

12. Verfahren nach einem der Ansprüche 1 bis 11, wobei Informationen, die die Anzahl der logischen Einheiten (110) und den relativen Zeitversatz zwischen den Zeitschlitzstrukturen der logischen Einheiten (110) darstellen, auf der Grundlage der empfangenen Signalisierung bestimmt werden, und die logischen Einheiten (110) der ersten Kommunikationseinheit (100) mit den logischen Einheiten (210) der zweiten Kommunikationseinheit (200) gepaart werden.

13. Kommunikationseinheit (100), die für den Betrieb in einem drahtlosen Zeitduplex (time division duplex, TDD) -System konfiguriert ist, in dem die Kommunikation in zwei Richtungen zwischen der Kommunikationseinheit (100) und einer anderen Kommunikationseinheit (200) durch Zuweisung unterschiedlicher Zeitschlitze getrennt ist,
- wobei die Kommunikationseinheit (100) mindestens zwei logische Einheiten (110) und eine Kommunikationsschaltung (120) umfasst, und wobei die Kommunikationseinheit (100) konfiguriert ist, um die mindestens zwei logischen Einheiten (110) für den Betrieb mit der Kommunikationsschaltung (120) zu aktivieren, um eine Kommunikation auf demselben Frequenzkanal mit der Kommunikationsschaltung (220) und entsprechenden logischen Einheiten (210) in der anderen Kommunikationseinheit (200) zu ermöglichen, wobei jeder logischen Einheit (110) der Kommunikationseinheit (100) mindestens ein Zeitschlitz für jede der beiden Richtungen in einer Zeitschlitzstruktur zugewiesen wird, wobei die Zeitschlitzstruktur zeitlich durch einen Bezugstakt getaktet ist; und
- wobei die Kommunikationseinheit (100) auch eine Koordinierungseinheit (130) umfasst, die konfiguriert ist, um den Betrieb der logischen Einheiten (110) der Kommunikationseinheit zu koordinieren, indem sie einen relativen Zeitversatz zwischen den Zeitschlitzstrukturen der logischen Einheiten (110) einführt, um die Kommunikationsverzögerung zu steuern und ein Aufrechterhalten des Versatzes zu ermöglichen, indem sie denselben Bezugstakt für die logischen Einheiten (110) verwendet.

14. Kommunikationseinheit nach Anspruch 13, wobei die Kommunikationseinheit (100) konfiguriert ist, um mit einer Zeitschlitzstruktur zu arbeiten, die auf Rahmen von Zeitschlitzen basiert, wobei jeder Rahmen einen ersten Satz von aufeinanderfolgenden Zeitschlitzen, die für eine Kommunikation in einer ersten Richtung infrage kommen, und einen zweiten Satz von aufeinanderfolgenden Zeitschlitzen, die für eine Kommunikation in einer zweiten Richtung in Frage kommen, umfasst und die Kommunikationseinheit (100) konfiguriert ist, um den Betrieb der logischen Einheiten (110) zu koordinieren, indem sie die Zeitschlitzstrukturen der logischen Einheiten so versetzt, dass der erste Satz von Zeitschlitzen einer ersten der logischen Einheiten und der zweite Satz von Zeitschlitzen einer zweiten der logischen Einheiten sich zeitlich überlappen.

15. Kommunikationseinheit nach Anspruch 13 oder 14, wobei die Kommunikationseinheit (100) konfiguriert ist, um den Betrieb der logischen Einheiten (110) zu koordinieren, indem sie die Zeitschlitzstrukturen der logischen Einheiten so versetzt, dass sich ein zugewiesener Zeitschlitz für die Kommunikation in einer ersten Richtung für eine erste der logischen Einheiten an der Position *i* befindet und sich ein zugewiesener Zeitschlitz für die Kommunikation in einer zweiten Richtung für eine zweite der logischen Einheiten an der Position *i±N* befindet, wobei *N* weniger als die Hälfte der Anzahl der Zeitschlitze in einem Rahmen ist.

16. Kommunikationseinheit nach einem der Ansprüche 13 bis 15, wobei das drahtlose TDD-System ein DECT (Digital Enhanced Cordless Telecommunication) -System ist und die logischen Einheiten (110) konfiguriert sind, um in einem unsynchronisierten DECT-Modus betrieben zu werden, aber zeitlich koordiniert zu werden, indem der relative Zeitversatz zwischen den Zeitschlitzstrukturen der logischen Einheiten (110) bereitgestellt und derselbe Bezugstakt verwendet wird.

## Revendications

1. Procédé de fonctionnement d'une première unité de communication (100) dans un système sans fil de duplexage à répartition de le temps, TDD, dans lequel la communication dans les deux sens entre la première unité de communication (100) et une seconde unité de communication (200) est séparée par attribution de tranches de temps différentes, dans lequel la première unité de communication (100) comprend au moins deux unités logiques (110), des circuits de communication (120) et une unité de coordination (130), et dans lequel le procédé comprend :
- l'activation (S1), pour la première unité de communication, des au moins deux unités logiques (110) pour fonctionner avec les circuits de communication (120) pour permettre la communication sur le même canal de fréquence avec les circuits de communication (220) et les unités logiques correspondantes (210) dans la seconde unité de communication (200), chaque unité logique (110) de la première unité de communication (100) se voyant attribuer au moins une tranche de temps pour chacun des deux sens dans une structure de tranche de temps, dans lequel la structure de tranche de temps est cadencée dans le temps par une horloge de référence ; et
- la coordination (S2), par l'unité de coordination (130), du fonctionnement des unités logiques (110) de la première unité de communication (100) en introduisant un décalage temporel relatif entre les structures de tranches de temps des unités logiques (110) pour contrôler le retard de communication et permettre le maintien du décalage en utilisant la même horloge de référence pour les unités logiques (110).

2. Procédé selon la revendication 1, dans lequel le décalage est déterminé en fonction d'une exigence de latence et/ou d'une exigence de débit.

3. Procédé selon la revendication 1 ou 2, dans lequel la structure de tranche de temps est basée sur des trames de tranches de temps, dans lequel chaque trame comprend un premier ensemble de tranches de temps consécutives éligibles pour une communication dans un premier sens et un second ensemble de tranches de temps consécutives éligibles pour une communication dans un second sens, et le fonctionnement des unités logiques (110) est coordonné en décalant les structures de tranches de temps des unités logiques (110) de telle sorte que le premier ensemble de tranches de temps d'une première des unités logiques (110) et le second ensemble de tranches de temps d'une seconde des unités logiques se chevauchent dans le temps.

4. Procédé selon la revendication 3, dans lequel le premier ensemble de tranches de temps d'une première des unités logiques (110) sont des tranches de temps de liaison descendante et le second ensemble de tranches de temps d'une seconde des unités logiques (110) sont des tranches de temps de liaison montante pour fournir un chevauchement entre les tranches de temps de liaison montante et les tranches de temps de liaison descendante des unités logiques (110).

5. Procédé selon l'une quelconque des revendications 1 à 4, dans lequel le fonctionnement des unités logiques (110) est coordonné en décalant les structures de tranches de temps des unités logiques (110) de telle sorte qu'une tranche de temps attribuée pour la communication dans un premier sens pour une première des unités logiques (110) est située à la position i et une tranche de temps attribuée pour la communication dans une seconde direction pour une seconde des unités logiques (110) est située à la position *i±N,* où *N* est inférieur à la moitié du nombre de tranches de temps dans une trame.

6. Procédé selon la revendication 5, dans lequel *N* est sélectionné pour accommoder le temps de commutation nécessaire pour commuter entre le mode de réception et le mode de transmission, et/ou le temps de traitement de paquet nécessaire pour traiter un paquet reçu.

7. Procédé selon la revendication 5 ou 6, dans lequel *N* est égal à 1 ou 2.

8. Procédé selon l'une quelconque des revendications 5 à 7, dans lequel le fonctionnement des unités logiques (110) est coordonné de telle sorte qu'un premier ensemble de tranches de temps attribuées pour la communication dans un premier sens pour une première des unités logiques (110) et un second ensemble de tranches de temps attribuées pour la communication dans une seconde direction pour une seconde des unités logiques (110) se chevauchent dans le temps, chaque ensemble de tranches de temps comprenant au moins une tranche de temps qui est autorisée pour la communication et au moins un tranche de temps qui est désactivée pour la communication afin d'éviter les collisions.

9. Procédé selon la revendication 8, dans lequel le fonctionnement des unités logiques (110) est coordonné de telle sorte qu'une priorité dans le temps soit donnée à la communication dans le premier sens en ce que la ou les tranches de temps autorisées pour la communication dans le premier sens se produisent dans une trame avant la ou les tranches de temps autorisées pour la communication dans la seconde direction.

10. Procédé selon la revendication 9, dans lequel le fonctionnement des unités logiques (110) est coordonné de telle sorte que la priorité dans le temps est changée en communication dans le second sens en ce que le ou les tranches de temps autorisées pour la communication dans le second sens se produisent dans une trame avant la ou les tranches de temps autorisées pour la communication dans le premier sens.

11. Procédé selon l'une quelconque des revendications 1 à 10, dans lequel, pour chaque unité logique (110), des informations représentant la structure de tranches de temps et/ou les tranches de temps attribuées sont annoncées par une signalisation entre la première unité de communication (100) et la seconde unité de communication (200).

12. Procédé selon l'une quelconque des revendications 1 à 11, dans lequel les informations représentant le nombre d'unités logiques (110) et le décalage temporel relatif entre les structures de tranches de temps des unités logiques (110) sont déterminées sur la base de la signalisation reçue, et les unités logiques (110) de la première unité de communication (100) sont appariées avec les unités logiques (210) de la seconde unité de communication (200) .

13. Unité de communication (100) configurée pour fonctionner dans un système sans fil de duplexage à répartition de le temps, TDD, dans lequel la communication dans les deux sens entre l'unité de communication (100) et une autre unité de communication (200) est séparée par l'attribution de tranches de temps différentes,
- dans laquelle l'unité de communication (100) comprend au moins deux unités logiques (110) et des circuits de communication (120), et dans laquelle l'unité de communication (100) est configurée pour activer les au moins deux unités logiques (110) pour fonctionner avec les circuits de communication (120) pour permettre la communication sur le même canal de fréquence avec des circuits de communication (220) et des unités logiques correspondantes (210) dans l'autre unité de communication (200), chaque unité logique (110) de l'unité de communication (100) étant attribuée à au moins une tranche de temps pour chacune des deux sens dans une structure de tranche de temps, dans laquelle la structure de tranche de temps est cadencée dans le temps par une horloge de référence ; et
- dans laquelle l'unité de communication (100) comprend également une unité de coordination (130) configurée pour coordonner le fonctionnement des unités logiques (110) de l'unité de communication en introduisant un décalage temporel relatif entre les structures de tranches de temps des unités logiques (110) pour contrôler le retard de communication et permettre le maintien du décalage en utilisant la même horloge de référence pour les unités logiques (110).

14. Unité de communication selon la revendication 13, dans laquelle l'unité de communication (100) est configurée pour fonctionner sur une structure de tranches de temps qui est basée sur des trames de tranches de temps, dans laquelle chaque trame comprend un premier ensemble de tranches de temps consécutives éligibles pour une communication dans un premier sens et un second ensemble de tranches de temps consécutives éligibles pour une communication dans un second sens, et l'unité de communication (100) est configurée pour coordonner le fonctionnement des unités logiques (110) en décalant les structures de tranches de temps des unités logiques de telle sorte que le premier ensemble de tranches de temps d'une première des unités logiques et le second ensemble de tranches de temps d'une seconde des unités logiques se chevauchent dans le temps.

15. Unité de communication selon la revendication 13 ou 14, dans laquelle l'unité de communication (100) est configurée pour coordonner le fonctionnement des unités logiques (110) en décalant les structures de tranches de temps des unités logiques de telle sorte qu'une tranche de temps attribuée pour la communication dans un premier sens pour une première des unités logiques est située à la position i et une tranche de temps attribuée pour la communication dans un second sens pour une seconde des unités logiques est situé à la position *i±N,* où *N* est inférieur à la moitié du nombre de tranches de temps dans une trame.

16. Unité de communication selon l'une quelconque des revendications 13 à 15, dans laquelle le système TDD sans fil est un système de télécommunications numériques améliorées sans fil, DECT, et les unités logiques (110) sont configurées pour fonctionner en mode DECT non synchronisé, mais coordonnées dans le temps, en fournissant le décalage temporel relatif entre les structures de tranches de temps des unités logiques (110) et en utilisant la même horloge de référence.
